**Europäisches Patentamt**

**European Patent Office**

**Office européen des brevets**

(19)

(11) Veröffentlichungsnummer: **0 107 778**
**B1**

# (12) EUROPÄISCHE PATENTSCHRIFT

(45) Veröffentlichungstag der Patentschrift:
**02.09.87**

(21) Anmeldenummer: **83109258.0**

(22) Anmeldetag: **19.09.83**

(51) Int. Cl.⁴: **B 29 B 11/10, B 29 C 47/10**

(54) **Verfahren und Vorrichtung zur Verarbeitung einer plastifizierbaren Masse.**

(30) Priorität: **01.10.82 CH 5814/82**

(43) Veröffentlichungstag der Anmeldung:
**09.05.84 Patentblatt 84/19**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**GB-A-643 990**
**US-A-2 904 830**

**Prospekt "Midi Preformer" der Fa. Barwell/Cambridge**

(73) Patentinhaber: **Crowe, Anthony, Langgarbenstrasse 18, CH- 4416 Bubendorf (CH)**

(72) Erfinder: **Crowe, Anthony, Langgarbenstrasse 18, CH- 4416 Bubendorf (CH)**

(74) Vertreter: **Eschmann, Heinz, A. Braun, Braun, Héritier, Eschmann AG Patentanwälte Holbeinstrasse 36- 38, CH- 4051 Basel (CH)**

## Beschreibung

Die vorliegende Erfindung betrifft ein Verfahren zur Verarbeitung einer plastifizierbaren Masse, insbesondere einer Gummimischung, wobei die Masse durch Walkarbeit vorgewärmt und plastifiziert und anschliessend aus einem Zylinder mittels eines Kolbens durch eine Matrize gepresst und in genau dosiertem Volumen abgetrennt wird. Die Erfindung umfasst ferner einen zur Durchführung dieses Verfahrens dienenden Rohlingsautomaten mit einem Kolbenextruder, welcher an seinem freien Ende eine Extrusionsmatrize sowie innerhalb eines Zylinders einen beweglich gelagerten Kolben aufweist, welcher mit Antriebsmitteln zur Erzielung einer hin- und hergehenden Kolbenbewegung verbunden ist.

Die bekannten, zur Verarbeitung von Rohgummi zu Halbfabrikaten dienenden Maschinen weisen ein getrennt von der Extrusionsvorrichtung aufgestelltes, von einer zusätzlichen Person zu bedienendes Walzwerk auf, in welchem der in Streifen oder Platten angelieferte Rohgummi vorgewärmt und plastifiziert wird. Nach dieser aufwendigen Vorbehandlung muss zwecks Beschickung der Maschine zunächst der Kolben zurückgezogen werden, worauf der als Matrizenhalter dienende Kopf geöffnet, der Rohgummi eingeschoben, der Kopf geschlossen und anschliessend das Vakuum angelegt werden kann. Erst jetzt kann die Vorschubbewegung des Kolbens erfolgen. Eine solche Maschine wurde zum Beispiel von der Firma Barwell/Cambridge (GB) unter der Bezeichnung Midi-Preformer hergestellt.

Ein weiteres Problem der bestehenden Maschinen dieser Art besteht in der möglichst genauen Einhaltung eines konstanten Volumens für die in die Pressform eingebrachten Rohlinge. Gemäss dem bekannten Verfahren wird dieses Volumen über einen hydraulischen Steuerkreis gemessen, wobei die Genauigkeit von einer guten und gleichmässigen Plastizität der Gummimischung, d.h. von der Anwärmung und der aufgewendeten Walkarbeit abhängt. Aus diesem Grunde ist es gemäss diesem bekannten Verfahren absolut erforderlich, den Rohgummi vor dessen Verarbeitung in einem zusätzlichen Walzwerk auf die relativ hohe Temperatur von etwa 80°C vorzuwärmen. Der damit verbundene Energieverbrauch ist umso höher zu bewerten, als die Rohlinge vor der Lagerung gekühlt werden müssen.

Zum Abtrennen der aus der Matrize austretenden Halbfabrikate verwendet man gemäss dem bekannten Verfahren ein kontinuierlich umlaufendes Messer, für welches verschiedene fest vorgegebene Drehzahlen zur Verfügung stehen. Die Erfahrung zeigt, dass sich bei dieser Trennmethode beim Verarbeiten dicker Teile und geringer Trenngeschwindigkeit schräge Schnittflächen und Verformungen ergeben, wobei der Gummi auf das Messer drückt und dieses abzubremsen versucht. Es wäre daher vorteilhafter, wenn der Trennvorgang nicht periodisch, d.h. von der Drehzahl des Trennmessers abhängig eingeleitet werden würde, sondern wenn die Abtrennung des Halbfabrikates erst dann erfolgte, sobald das vorgegebene Volumen erreicht ist. Ferner ist die Länge des Rohlings bei periodisch rotierendem Trennmesser begrenzt.

Auch ist es nachteilig, dass an den derzeit verwendeten Anlagen der als Matrizenhalter dienende Kopf zum Auffüllen periodisch geöffnet werden muss, so dass sich die Matrize abkühlt, was ebenfalls einen Zeit- und Energieverlust sowie Ausschuss beim Anfahren mit sich bringt. Es wäre somit anzustreben, dass der Ausschuss wenn irgend möglich auf das Ausscheiden des ersten bzw. eventuell letzten Teiles beschränkt werden könnte.

Es ist ferner ein Nachteil der bekannten Anlage, dass die Produktionsgeschwindigkeit nicht ohne Stillegung der gesamten Einrichtung bzw. Inkaufnahme eines grösseren anfänglichen Ausschusses verändert werden kann.

Es ist daher die Aufgabe der vorliegenden Erfindung, ein vereinfachtes Verfahren und eine Vorrichtung zur Verarbeitung von plastifizierbaren Massen, insbesondere von Rohgummi zu Halbfabrikaten vorzuschlagen, welche einen praktisch kontinuierlichen und automatischen bzw. mit minimaler Wartung verbundenen Betrieb der Anlage gestatten, wobei die Möglichkeit geschaffen wird, die Anlage mit kaltem Ausgangsmaterial zu beschicken, um damit Personal und Energie einzusparen.

Diese Aufgabe wird durch das im unabhängigen Patentanspruch 1 definierte Verfahren sowie den im Anspruch 7 zur Durchführung dieses Verfahrens definierten Rohlingsautomaten gelöst.

Unter "kaltem" Ausgangsmaterial wird im vorliegenden Zusammenhang eine plastifizierbare Masse, insbesondere eine Gummimischung verstanden, welche vor der Einspeisung in den Rohlingsautomaten noch keinem Plastifizier- und Vorwärmvorgang unterzogen wurde und daher praktisch Umgebungstemperatur aufweist.

Gemäss einer bevorzugten Ausführungsform dieses Verfahrens und des zu dessen Durchführung dienenden Rohlingsautomaten soll eine exakte Volumenkontrolle ermöglicht werden. Dies wird durch die in den Ansprüchen 4 und 5 bzw. 9 definierte Merkmalskombination erreicht.

Nachstehend wird anhand der beiliegenden Zeichnung ein Ausführungsbeispiel des Erfindungsgegenstandes beschrieben.

Fig. 1 ist eine vereinfachte Perspektivdarstellung eines erfindungsgemässen Rohlingsautomaten zur Verarbeitung von Gummimischungen,

Fig. 2 ist eine Schnittdarstellung der Kolben-Zylinderanordnung und

Fig. 3 zeigt die Kolben-Zylinderanordnung in einer weiteren Betriebsphase.

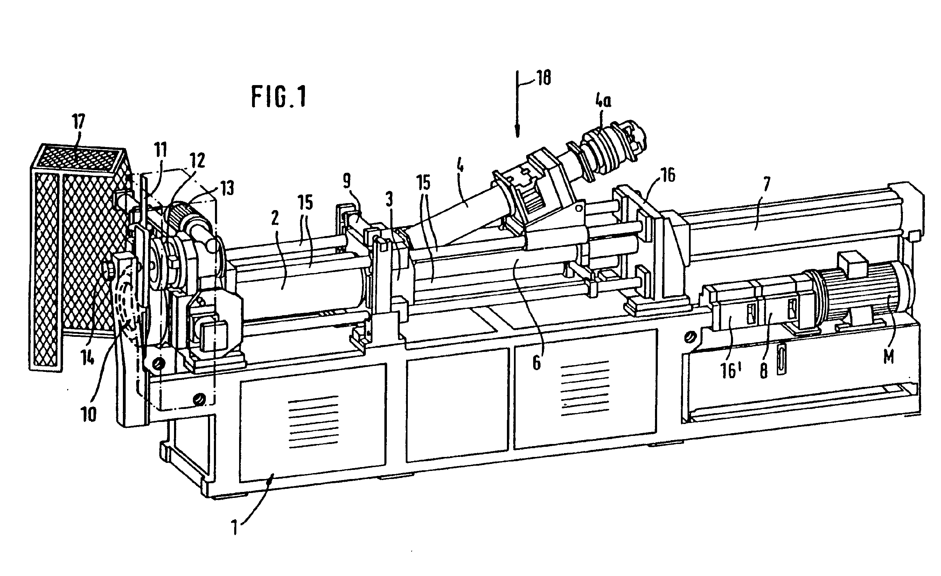

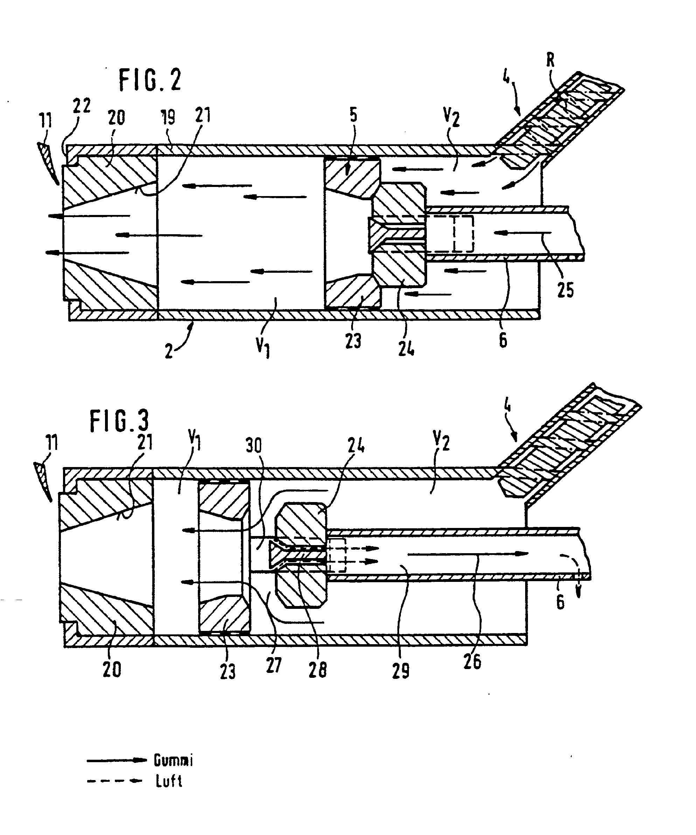

Gemäss Fig. 1 weist der Rohlingsautomat ein in seiner Gesamtheit mit 1 bezeichnetes Gestell auf, auf welchem die verschiedenen, zur Durchführung des erfindungsgemässen Verfahrens dienenden Vorrichtungen montiert sind. Ein mit 2 bezeichneter Kolbenextruder welcher in der folgenden Beschreibung der Einfachheit halber als Extruder bezeichnet wird, steht über eine Ladekammer 3 mit einer Füll- und Plastifizierschnecke 4 in Verbindung. Die Kolbenstange 6 eines im Zylinder 2 hin und hergehend beweglich gelagerten Kolbens 5 (Fig. 2) ist mit dem nicht sichtbaren Antriebskolben eines Hydraulikaggregates 7 verbunden, das über einen Motor M und eine Hydraulikpumpe 8 betrieben wird. Auch die Füllschnecke 4 ist mit einem hydraulischen Antrieb 4a gekoppelt, welcher dieselbe in Drehung versetzt. Die beim Übergang von der Füllschnecke 4 zum Zylinder 2 angeordnete Ladekammer 3 ist mit einer hydraulischen Öffnungsvorrichtung 9 versehen, dank welcher sich die Ladekammer zwecks Reinigung des Zylinders mühelos öffnen lässt.

An dem der Ladekammer 3 abgewandten Endabschnitt des Extrudes 2 mündet derselbe in einen Matrizenhalter 10, in welchem die zur Formgebung der extrudierten Halbfabrikate erforderliche Matrize befestigt ist. Im Austrittsbereich der extrudierten Teile ist ferner eine Schneidvorrichtung 11 angeordnet, die über eine elektromagnetische Bremse-Kupplungs-Kombination 12 mit einem Antriebsmotor 13 verbunden ist. Eine Stellschraube 14 dient zur Verstellung des Schneidmessers 11.

Zwischen der Ladekammer 3 und dem Matrizenhalter 10 sind Zugstangen 15 angeordnet, die sich im übringen auch über den Bereich der Füllschnecke 4 erstrecken und deren Enden in einer vertikalen Platte 16 verankert sind.

Das für die rotierende Antriebsbewegung der Füllschnecke 4 vorgesehene Antriebsaggregat 4a wird von einer Hydraulikpumpe 16 beschickt, die ebenfalls von dem Motor M angetrieben wird. Die hydraulischen Verbindungen sind in Fig. 1 der Übersichtlichkeit halber weggelassen.

Es ist ferner ein Schutzgitter 17 mit Verkleidungsblech vorgesehen, das sämtliche an der Kopfseite des Extruders 2 angeordnete Aggregate abdeckt.

Im Betrieb der beschriebenen Maschine wird ein Rohmaterial, im vorliegenden Falle eine Rohgummimischung, in Richtung des Pfeiles 18 der Füllschnecke 4 zugeführt, die dieses Rohmaterial zunächst plastifiziert.

Bei diesem während des Extrudiervorganges stattfindenden Plastifizierungsvorgang erwärmt sich die Rohgummimasse und wird dadurch für die anschliessende Verarbeitung vorbereitet. Dank der Vorschaltung der Füll- und Plastifizierschnecke 4 kann bei der dargestellten Anlage im Gegensatz zu sämtlichen bekannten Anlagen dieser Art eine Kaltbeschickung stattfinden, so dass es hier nicht mehr notwendig ist, das Material vor der Verarbeitung auf einem getrennten Walzwerk vorzuplastifizieren.

Zum weiteren Verständnis des erfindungsgemässen Verfahrens ist es nun erforderlich, die Konstruktion des Extruders 2 anhand der Figuren 2 und 3 zu betrachten. Wie zunächst Fig. 2 zeigt, weist der in seiner Gesamtheit mit bezeichnete Extruder einen Zylinder 19 auf, an dessen Vorderseite eine Matrize 20 mit einer der Kontur des Halbfabrikats angepassten Düsenöffnung 21 angeordnet ist. Die Matrize 20 wird durch eine Ringschulter 22 des Zylinders gehalten. Knapp vor der Frontseite der Matrize 20 ist das Schneidmesser 11 angedeutet.

Der Kolben 5 weist einen ringförmigen Mantel 23 und einen Kern 24 auf. Der Kern 24 ist gegenüber dem Mantel 23 in axialer Richtung verschiebbar, jedoch ist diese Verschiebbarkeit auf ein bestimmtes Mass begrenzt, so dass der Mantel bei der Axialbewegung des Kernes, der mit der Kolbenstange 6 verbunden ist, mitgenommen wird. In der Betriebsphase gemäss Fig. 2 sei angenommen, dass sich der Kolben in Richtung des Pfeiles 25 nach links bewegt, wobei sich links vom Kolben, in der mit V1 bezeichneten Zylinderkammer, Rohgummimasse befindet, die durch die Düse 21 ausgestossen wird. In den rechts des Kolbens befindlichen, mit V2 bezeichneten Zylinderabschnitt mündet die Füllschnecke 4, durch welche die Rohgummimasse R in den Zylinder eingebracht wird. Wie Fig. 2 zeigt, liegt der Kern 24 des Kolbens in dieser Betriebslage am ringförmigen Mantel 23 an, so dass der Übertritt der Rohgummimasse von der Kammer V2 in die Kammer V1 zunächst nicht möglich ist.

Sobald der Kolben seinen vorderen Totpunkt (Endlage links) erreicht hat, kehrt derselbe seine Bewegungsrichtung um und wird nun in Richtung des Pfeiles 26 (Fig. 3) zurückgezogen. Dabei löst sich nun der Kern 24 vom Kolbenmantel 23 und es entsteht ein mit 27 bezeichneter Ringspalt, durch welchen während der Rückzugbewegung des Kolbens Rohgummimasse in Pfeilrichtung von der hinteren Kammer V2 in die vordere Kammer V1 überströmt. Die beiden Kolbenteile 23 und 24 bilden somit eine Art Rückschlagventil, welches ein Überströmen der Rohgummimasse von der Kammer V2 in die Kammer V1 nur bei der Rücklaufbewegung des Kolbens gemäss Fig. 3 gestattet. Während dieser Rücklaufbewegung kann die Beschickung des Zylinders durch die Füllschnecke 4 unterbrochen sein, doch ist es grundsätzlich auch möglich, die Füllschnecke 4 kontinuierlich weiter arbeiten zu lassen.

Im Kolbenkern 24 ist ferner ein Rückschlagventil 28 angeordnet, das mit der Bohrung 29 der hohlen Kolbenstange 6 in Verbindung steht. Bei der Rücklaufbewegung des Kolbens gemäss fig. 3 hebt sich das Verschlussorgan von seinem Sitz ab, so dass durch den freigewordenen Querschnitt des Rückschlagventils 28 Luft von der Kammer V1 durch die hohle Kolbenstange 6 abströmen kann. Diese Luftströmung ist in Fig. 3 mit unterbrochenen Pfeilen dargestellt.

Die bewegliche Verbindung zwischen Kolbenkern 24 und Kolbenmantel 23 kann vom Fachmann in verschiedener Weise gelöst werden. Bei der vorliegenden Ausführungsform ist zwischen den beiden Teilen ein Gleitstück 30 angeordnet, an welchem der Kolbenkern 24 zwischen den beiden Endlagen gleitend geführt ist.

Wie sich aus der vorangehenden Beschreibung ergibt, wird der Rohlingsautomat im Gegensatz zu den bisher bekannten Maschinen dieser Art während des Extrudiervorganges gefüllt, was zu einem Zeitgewinn und selbstverständlich zu einer erheblichen Einsparung an Arbeit und Energie führt. Ausserdem entfällt die Anschaffung des bisher erforderlichen zusätzlichen Walzwerkes.

Bei der Herstellung von Teilen aus Gummimischungen oder ähnlichen plastifizierbaren Massen ist es erfahrungsgemäss besonders wichtig, dass für jedes herzustellende Einzelteil das genau gleiche Massevolumen zur Verfügung steht. Dies wird gemäss der vorliegenden Erfindung dadurch erreicht, dass der Kolben 5 während seiner linearen Vorschubbewegung pro Längenintervall von beispielsweise 0,005 mm einen Steuerimpuls abgibt, welcher gespeichert und für die Beendigung des Herstellungsprozesses ausgewertet wird. In Abhängigkeit von der linearen Vorschubbewegung des Kolbens wird das Messer 11 betätigt, sobald eine voreingestellte Impulszahl erreicht ist.

Auch der Startzeitpunkt sowie die die Fülldauer beeinflussende Drehzahl der Füllschnecke 4 kann bei intermittierender Beschickung in Abhängigkeit von der Vorlaufbewegung des Kolbens 5 bestimmt werden. Dank dieser Steuerungsart lässt sich nicht nur die für jedes einzelne Teil verfügbare Masse exakt abmessen, sondern es kann auch die Länge der herzustellenden Teile beliebig gewählt werden.

Anhand der voreingestellten Impulszahl und der laufenden Impulsgabe durch den vorlaufenden Kolben wird ferner erreicht, dass die Kolbengeschwindigkeit über das hydraulische Steuersystem automatisch geregelt wird. Durch diese Messung der Kolbengeschwindigkeit und die Steuerung des Trennmessers 11 und/oder der Füll- und Plastifizierschnecke 4 in Abhängigkeit vom Kolbenvorschub lässt sich das genaue Gewicht bzw. Volumen des Gummirohlings mit Sicherheit gewährleisten.

An der Bohrung der hohlen Kolbenstange 6 ist gemäss Fig. 3 ein Vakuum angelegt, so dass beim Vorlauf des Kolbens in die Kammer V1 verdrängte Luft abgesaugt wird. Der Weg der abgesaugten Luft ist mit unterbrochenen Pfeilen veranschaulicht.

Wenn das erfindungsgemässe Verfahren und die zu dessen Durchführung dienende Maschine anhand des vorliegenden Ausführungsbeispieles für die Verarbeitung einer Rohgummimischung beschrieben wurde, so lässt sich das Verfahren und die Maschine ohne weiteres auch zur Verarbeitung anderer plastifizierbarer Massen, beispielsweise Polyurethan, Ebonit, Silicon etc. einsetzen.

Gemäss dem beschriebenen Ausführungsbeispiel mündet die Füll- und Plastifizierschnecke 4 in denjenigen Abschnitt des Extruders 2, welcher durch die der Extrusionsmatrize 20 abgewandte Kolbenfläche begrenzt ist. Bei dieser Ausführung muss demgemäss entweder im Kolben 24 oder in dem ringförmigen Mantel 23 ein Rückschlagventil angeordnet sein. Die Anordnung eines solchen Rückschlagventils kann jedoch entfallen, wenn die Füll- und Plastifizierschnecke 4 in den vorderen Abschnitt des Extruders 2 mündet, welcher zwischen der Matrize 20 und dem Kolben 5 liegt. Bei dieser Beschickungsart würde somit der Zylinderraum zwischen Matrize 20 und Kolben 5 jeweils durch eine verschliessbare Öffnung mittels der Füll- und Plastifizierschnecke 4 gefüllt und die eingefüllte Masse anschliessend periodisch vom Kolben durch die Matrize 20 ausgeschoben. Diese Ausführung kommt insbesondere für sehr kleine Maschinen in Frage.

Anstelle der Füll- und Plastifizierschnecke 4 liesse sich auch ein anderes Aggregat, beispielsweise eine entsprechend dimensionierte Zahnradpumpe verwenden.

**Patentansprüche**

1. Verfahren zur Verarbeitung einer plastifizierbaren Masse, insbesondere einer Gummimischung, zu Halbfabrikaten, wobei die Masse durch Walkarbeit vorgewärmt und plastifiziert und anschliessend aus einem Zylinder (19) mittels eines Kolbens (5) durch eine Matrize (20) gepresst und in genau dosiertem Volumen abgetrennt wird, dadurch gekennzeichnet, dass die plastifizierbare Masse dem genannten Zylinder (19) über ein in diesen einmündendes Füll- und Plastifizierungsaggregat (4) zugeführt wird, in dem die zunächst kalte Masse durch die Walkarbeit vorgewärmt und plastifiziert wird.

2. Verfahren nach Anspruch 1, dadurch gekennzeichnet, dass die vorgewärmte und plastifizierte Masse der der Matrize (20) abgewandten Seite des Zylinders (19) zugeführt und auf die vor der Arbeitsfläche des Kolbens (5) liegende Zyliderseite überführt wird.

3. Verfahren nach Anspruch 2, dadurch gekennzeichnet, dass die vorgewärmte und plastifizierte Masse bei jeder Rücklaufbewegung des Kolbens (5) durch eine verschliessbare Öffnung direkt vor die Arbeitsfläche des Kolbens gebracht und vom Kolben dann durch die Matrize (20) gestossen wird.

4. Verfahren nach einem der Ansprüche 1 bis 3, dadurch gekennzeichnet, dass die Drehzahl des Füll- und Plastifizieraggregats (4) und die Einfülldauer einerseits sowie der Einfüllbeginn andererseits in Abhängigkeit von der Messung des Kolbenvorschubs bestimmt werden.

5. Verfahren nach einem der Ansprüche 1 bis 4, dadurch gekennzeichnet, dass die Abtrennung des aus der Matrize austretenden Rohlings in Abhängigkeit von der linearen Vorschubbewegung des Kolbens (5) erfolgt.

6. Rohlingsautomat zur Verarbeitung einer plastifizierbaren Masse, insbesondere einer Gummimischung, zu Halbfabrikaten, wobei die Masse durch Walkarbeit vorgewärmt und plastifiziert und anschliessend aus einem Zylinder (19) eines Kolbenextruders (2) durch eine Matrize (20) gepresst und in genau dosiertem Volumen abgetrennt wird, wobei innerhalb des Zylinders (19) ein beweglich gelagerter Kolben (15) vorhanden ist, welcher mit Antriebsmitteln zur Erzielung einer hin- und hergehenden Kolbenbewegung verbunden ist, dadurch gekennzeichnet, dass an dem Zylinder (19) ein Füll- und Plastifizieraggregat (4) angeordnet ist, das direkt in den Arbeitsraum (V₂) des Zylinders mündet und in dem die Vorerwärmung und Plastifizierung durch die Walkarbeit erfolgt.

7. Rohlingsautomat nach Anspruch 6, dadurch gekennzeichnet, dass der Kolben (5) ein Rückschlagventil (23, 24) aufweist, das den Übergang der in den Zylinder (2) eingefüllten Masse während des Betriebes von einer Kolbenseite (V2) zur anderen (V1) nur während des Kolbenrücklaufs gestattet, wobei in den der Matrize (20) gegenüberliegenden Zylinderabschnitt (V2) das Füll- und Plastifizieraggregat (4) mündet, derart, dass die Masse kurz vor dem Eintritt in den Extrusionszylinder (2) vorgewärmt und plastifiziert wird.

8. Rohlingsautomat nach Anspruch 7, dadurch gekennzeichnet, dass die Kolbenstange (6) eine Bohrung aufweist, welche einerseits an eine Vakuumquelle angeschlossen ist, andererseits über ein Rückschlagventil (28) in den matrizenseitigen Zylinderraum (V1) mündet, derart, dass die in dem vorgenannten Zylinderraum (V1) enthaltene Luft beim Kolbenrücklauf abgesaugt wird.

9. Rohlingsautomat nach einem der Ansprüche 6 bis 8, dadurch gekennzeichnet, dass der lineare Kolbenvorschub mit einer Impulssteuerung kombiniert ist, die ihrerseits bei Erreichen einer vorher eingestellten Impulszahl das zum Abtrennen des Rohlings dienende Trennmesser (11) und den Einschaltzeitpunkt des Füll- und Plastifizieraggregats (4) steuert.

10. Rohlingsautomat nach einem der Ansprüche 6 bis 9, dadurch gekennzeichnet, dass eine im Mündungsbereich des Füll- und Plastifizieraggregats (4) liegende Ladekammer (3) mit einer hydraulisch betätigten Öffnungsvorrichtung (9) versehen ist.

11. Rohlingsautomat nach einem der Ansprüche 6 bis 10, dadurch gekennzeichnet, dass das Füll- und Plastfizieraggregat (14) eine Schnecke ist.

## Claims

1. Method for the processing of a plasticisable compound, in particular a rubber mixture, into semi-finished products, the compound being pre-heated and plasticised by milling work and subsequently pressed from a barrel (19) through a die (20) by means of a ram (5) and separated in precisely metered volume, characterised in that the plasticisable compound is fed to the said barrel (19) via a filling and plasticising unit (4) opening out into the latter, in which the initially cold compound is pre-heated and plasticised by the milling work.

2. Method according to claim 1, characterised in that the pre-heated and plasticised compound is fed to the side of the barrel (19) facing away from the die (20) and is transferred to the barrel side in front of the working surface of the ram (5).

3. Method according to claim 2, characterised in that, during each return movement of the ram (5), the pre-heated and plasticised compound is brought directly in front of the working surface of the ram through a closable opening and is then pushed by the ram through the die (20).

4. Method according to one of claims 1 to 3, characterised in that the speed of the filling and plasticising unit (4) and the duration of feeding on the one hand as well as the beginning of feeding on the other hand are determined as a function of the measurement of the ram advance.

5. Method according to one of claims 1 to 4 characterised in that the separation of the free form emerging from the die takes place as a function of the linear advance movement of the ram (5).

6. Automatic preformer for the processing of a plasticisable compound, in particular a rubber mixture, into semi-finished products, the compound being pre-heated and plasticised by milling work and subsequently pressed from a barrel (19) of a ram extruder (2) through a die (20) and separated in precisely metered volume, there being within the barrel (19) a movably mounted ram (5), which is connected to drive means for achieving a to-and-fro movement, characterised in that on the barrel (19) is arranged a filling and plasticising unit (4), which opens out directly into the working space (V₂) of the barrel and in which the pre-heating and plasticising takes place by milling work.

7. Automatic preformer according to claim 6, characterised in that the ram (5) has a non-return valve (23, 24), which allows transfer during operation of the compound fed into the barrel (2) from one ram side (V₂) to the other (V₁) only during the ram return, the filling and plasticising unit (4) opening out into the barrel section (V₂) opposite the due (20) in such a way that the compound is pre-heated and plasticised shortly before entering the extruder barrel (2).

8. Automatic preformer according to claim 7, characterised in that the ram rod (6) has a bore hole, which is connected on the one hand to a vacuum source and on the other hand passes via a non-return valve (28) to open out in the barrel space (V₁) on the dye side in such a way that the air contained in the said barrel space (V$_1$) is extracted during ram return.

9. Automatic preformer according to one of claims 6 to 8, characterised in that the linear ram advance is combined with a pulse control, which for its part controls the cutting knife (11) used for separation of the preform and the switching-on time of the filling and plasticising unit (4) when a previously set number of pulses has been reached.

10. Automatic preformer according to one of claims 6 to 9, characterised in that a charging chamber (3) with a hydraulically actuated opening device (9) is provided in the mouth region of the filling and plasticising unit (4).

11. Automatic preformer according to one of claims 6 to 10, characterised in that the filling and plasticising unit (4) is a screw.

**Revendications**

1. Procédé pour le traitement d'une matière pouvant être plastifiée, en particulier d'un mélange de caoutchouc, en vue d'obtenir des produits semi-manufacturés, la matière étant préchauffée et plastifiée par foulage, puis refoulée hors d'un cylindre (19) au moyen d'un piston (5) à travers une filière (20) et sectionnée en un volume mesuré avec précision, caractérisé en ce que la matière pouvant être plastifiée est admise dans le dit cylindre (19) par l'intermédiaire d'un appareil de remplissage et de plastification (4) qui débouche dans ce cylindre et dans lequel la matière initialement froide est préchauffée et plastifiée par le foulage.

2. Procédé suivant la revendication 1, caractérisé en ce que la matière préchauffée et plastifiée est admise du côté du cylindre (19) opposé à la filière (20) et est transférée du côté du cylindre situé devant la face de travail du piston (5).

3. Procédé suivant la revendication 2, caractérisé en ce que la matière préchauffée et plastifiée est amenée, â chaque course de recul du piston (5), à travers une ouverture obturable, directement devant la face de travail du piston et est ensuite refoulée par le piston à travers la filière (20).

4. Procédé suivant l'une quelconque des revendications 1 à 3, caractérisé en ce que la vitesse de rotation de l'appareil de remplissage et de plastification (4) et la durée de remplissage d'une part ainsi que le début du remplissage d'autre part, sont déterminés en fonction de la mesure de la course du piston.

5. Procédé suivant l'une quelconque des revendications 1 à 4, caractérisé en ce que le sectionnement de l'ébauche sortant de la filière s'effectue en fonction de la course linéaire du piston (5).

6. Automate d'ébauchage destiné à traiter une matière pouvant être plastifiée, en particulier un mélange de caoutchouc, en vue d'obtenir des produits semi-manufacturés, la matière étant préchauffée et plastifiée par foulage, puis refoulée hors d'un cylindre (19) d'une extrudeuse à piston (2) à travers une filière (20) et sectionnée en un volume mesuré avec précision, étant entendu qu'à l'intérieur du cylindre (19) est installé un piston (5) mobile qui est relié à des moyens d'entraînement prévus pour lui communiquer un mouvement alternatif, caractérisé en ce que sur le cylindre (19) est monté un appareil de remplissage et de plastification (4) qui débouche directement dans la chambre de travail (V2) du cylindre et dans lequel le préchauffage et la plastification s'effectuent par foulage.

7. Automate d'ébauchage suivant la revendication 6, caractérisé en ce que le piston (5) comporte un clapet de retenue (23, 24) qui ne permet le transfert de la matière introduite dans le cylindre (2), pendant le fonctionnement, d'un côté (V2) du piston vers l'autre (V1) que pendant le recul du piston, étant entendu que l'appareil de remplissage et de plastification (4) s'ouvre dans la section de cylindre (V2) opposée à la filière (20) de telle sorte que la matière soit préchauffée et plastifiée peu avant son entrée dans le cylindre d'extrusion (2).

8. Automate d'ébauchage suivant la revendication 7, caractérisé en ce que la tige de piston (6) présente un alésage qui, d'une part est raccordé à une source de vide et, d'autre part, débouche par l'intermédiaire d'un clapet (28) dans la chambre cylindrique (6) située du côté de la filière, de telle façon que l'air présent dans la chambre cylindrique (6) précitée soit aspiré lors du recul du piston.

9. Automate d'ébauchage suivant l'une quelconque des revendications 6 à 8, caractérisé en ce que la course linéaire du piston est combinée avec un dispositif de commande à impulsions qui, pour sa part, lorsqu'il atteint un nombre d'impulsions préréglé, actionne le couteau (11) destiné à sectionner l'ébauche et régit le moment d'enclechement de l'appareil de remplissage et de plastificatiom (4).

10. Automate d'ébauchage suivant l'une quelconque des revendications 1 à 9, caractérisé en ce qu'une chambre de charge (3) située dans la zone d'embouchure de l'appareil de remplissage et de plastification (4) est pourvue d'un dispositif d'ouverture (9) actionné hydrauliquement.

11. Automate d'ébauchage suivant l'une quelconque des revendications 6 à 10, caractérisé en ce que l'appareil de remplissage et de plastification (4) est un appareil à vis sans fin.

FIG.1

## FIG. 2

11  22  20  19  21  5  V₂  4  R

2  V₁  23  24  6  25

## FIG. 3

11  21  V₁  30  24  V₂  4

20  23  27  28  29  26  6

———▶ Gummi

‑ ‑ ‑ ‑▶ Luft